# EUROPÄISCHE PATENTSCHRIFT

(11) **EP 1 301 703 B1**
(45) Veröffentlichungstag und Bekanntmachung des Hinweises auf die Patenterteilung: **14.01.2004**
(21) Anmeldenummer: 01955222.3
(22) Anmeldetag: 03.07.2001
(51) Int. Cl.: F02M 61/18

(54) **BRENNSTOFFEINSPRITZSYSTEM**
FUEL INJECTION SYSTEM
SYSTEME D'INJECTION DE CARBURANT

(30) Priorität: 04.07.2000 DE 10032330
(43) Veröffentlichungstag der Anmeldung: 16.04.2003
(73) Patentinhaber: ROBERT BOSCH GMBH, 70442 Stuttgart (DE)
(72) Erfinder: ARNDT, Stefan, 70569 Stuttgart (DE); HERDEN, Werner, 70839 Gerlingen (DE)
(86) Internationale Anmeldenummer: PCT/DE2001/002399
(87) Internationale Veröffentlichungsnummer: WO 2002/002929

(56) Entgegenhaltungen:
- EP-A- 1 006 265
- US-A- 5 540 200
- PATENT ABSTRACTS OF JAPAN vol. 2000, no. 07, 29. September 2000 (2000-09-29) & JP 2000 104647 A (DENSO CORP), 11. April 2000 (2000-04-11) & US 6 186 418 B1 (DENSO CORP) 13. Februar 2001 (2001-02-13)

## Beschreibung

### Stand der Technik

Die Erfindung geht aus von einem Brennstoffeinspritzsystem nach der Gattung des Hauptanspruchs.

Aus der EP 1006265 A1 ist ein Brennstoffeinspritzventil mit einer Spritzlochscheibe mit rasterartig angeordneten Einspritzlöchern bekannt.

Aus der DE 196 42 653 C1 ist bereits ein Verfahren zur Bildung eines zündfähigen Brennstoff-/Luftgemisches bekannt. In den Zylindern von direkteinspritzenden Brennkraftmaschinen ist ein zündfähiges Brennstoff-/Luftgemisch bildbar, indem in jedem von einem Kolben begrenzten Brennraum mittels eines Injektors bei Freigabe einer Düsenöffnung durch Abheben eines Ventilgliedes von einem die Düsenöffnung umfassenden Ventilsitz Brennstoff eingespritzt wird. Um unter allen Betriebsbedingungen der Brennkraftmaschine, insbesondere im Schichtladungsbetrieb, eine Verbrauchs- und emissionsoptimierte innere Gemischbildung in jedem Betriebspunkt des gesamten Kennfeldes zu ermöglichen, ist vorgesehen, daß der Öffnungshub des Ventilgliedes und die Einspritzzeit variabel einstellbar sind.

Aus der DE 38 08 635 C2 ist eine Brennstoffeinspritzvorrichtung zum direkten Einspritzen von Brennstoff in den Zylinder einer gemischverdichtenden Brennkraftmaschine bekannt. Die Brennstoffeinspritzvorrichtung beinhaltet ein Brennstoffeinspritzventil, das in der Zylinderwandung mit Abstand zum Zylinderkopf und gegenüber der Auslaßöffnung angeordnet ist, und eine Ausgangsöffnung, wobei die Strahlachse des Brennstoffeinspritzventils auf den Bereich um die im Zylinderkopf angeordnete Zündkerze gerichtet ist. Das Brennstoffeinspritzventil weist eine magnetbetätigte Ventilnadel mit schraubenförmigen Drallnuten zum Erzeugen einer Drallströmung des Einspritzstrahls auf. Das Brennstoffeinspritzventil ist mit seiner Strahlachse auf den in der Zylinderkopfmitte angeordneten Zündpunkt gerichtet.

Weiterhin ist aus der US 5,941,207 eine Vorrichtung zum Einspritzen von Brennstoff in den Brennraum einer gemischverdichtenden fremdgezündeten Brennkraftmaschine bekannt, bei der Brennstoff unter einem bestimmten Anfangswinkel kegelförmig in den Brennraum eingespritzt wird. Der eingespritzte Brennstoff füllt dabei die Brennkammer kegelförmig aus, wobei Effekte der Wandbenetzung weitgehend unterdrückt werden. Ein relativ flach ausgebildeter Kolben verformt die eingespritzte Brennstoffwolke während der Verdichtungsphase kugelförmig. Die kugelförmige Gemischwolke vermischt sich nur unwesentlich mit der zugeführten Luft und wird bei weiterer Verdichtung zur Funkenstrecke der Zündkerze geführt.

Aus der DE 198 27 219 A1 ist ein Brennstoffeinspritzventil für eine Brennkraftmaschine bekannt, welches eine Brennstoffstrahleinstellplatte aufweist. Diese besitzt erste Düsenlöcher, die entlang eines ersten Kreises angeordnet sind, der koaxial zu einer Mittelachse des Ventilkörpers ist. Weiterhin sind zweite Düsenlöcher vorhanden, die entlang eines zweiten Kreises angeordnet sind, der ebenfalls koaxial zur Mittelachse ist und einen Durchmesser hat, der größer als derjenige des ersten Kreises ist. Jede Lochachse der zweiten Düsenlöcher bildet einen spitzen Winkel mit einer Referenzebene, die senkrecht zur Mittelachse des Ventilkörpers ist, der kleiner als derjenige ist, der durch jede Lochachse der ersten Düsenlöcher mit der Referenzebene gebildet wird. Daher können Brennstoffzerstäubungen, die durch die ersten Düsenlöcher eingespritzt werden, weg von den Brennstoffzerstäubungen gerichtet werden, die durch die zweiten Düsenlöcher eingespritzt werden. Als ein Ergebnis stören sich die Brennstoffzerstäubungen, die durch die verschiedenen Kreise von Düsenlöchern eingespritzt werden, nicht gegenseitig.

Nachteilig an den aus den obengenannten Druckschriften bekannten Verfahren bzw. Vorrichtungen zum Einspritzen von Brennstoff in den Brennraum einer gemischverdichtenden fremdgezündeten Brennkraftmaschine sind insbesondere die komplizierten Brennraumgeometrien, welche nötig sind, den eingespritzten Brennstoff mit der zugeführten Luft zu vermischen, ein zündfähiges Brennstoff-/Luftgemisch zu bilden und dieses zur Zündung in die Nähe der Funkenstrecke der Zündkerze zu transportieren. Derartige Brennraumgeometrien sind zum einen schwer herstellbar, zum anderen kann die Verbrennung in Bezug auf die Emission von Stickoxyden und den Verbrauch von Brennstoff nicht optimiert werden.

Weiterhin ist von Nachteil, daß in den meisten Fällen die Zündkerze direkt durch das Brennstoffeinspritzventil angespritzt wird. Dadurch ist die Zündkerze einerseits starken thermischen Schockbelastungen ausgesetzt, andererseits lagert sich Ruß auf den Zündkerzenelektroden ab, wodurch die Lebensdauer der Zündkerze erheblich beschränkt wird.

Insbesondere ist an dem aus der DE 198 27 219 A1 bekannten Brennstoffeinspritzventil von Nachteil, daß der durch die unterschiedlichen Einspritzwinkel in den Brennraum eingespritzte Brennstoff größtenteils auf die Wände des Brennraums bzw. den Kolben auftrifft, dort abkühlt und somit nur unter hoher Schadstoffemission bzw. Rußentwicklung verbrannt werden kann.

### Vorteile der Erfindung

Das erfindungsgemäße Brennstoffeinspritzsystem mit den kennzeichnenden Merkmalen des Hauptanspruchs hat demgegenüber den Vorteil, daß durch die spezielle Anordnung des Brennstoffeinspritzventils relativ zum Brennraum der Einspritzstrahl so geführt wird, daß die Gemischwolke den Brennraum optimal ausfüllt.

Insbesondere wird dadurch das Benetzen der Brennraumwandungen verhindert. Dadurch ist ein emissionsarmer und brennstoffsparender Verbrennungsprozeß möglich.

Durch die in den Unteransprüchen aufgeführten Maßnahmen sind vorteilhafte Weiterentwicklungen des im Hauptanspruch angegebenen Einspritzsystems möglich.

Von Vorteil ist insbesondere die Gestaltung der Spritzlochscheibe des Brennstoffeinspritzventils, die eine Gemischwolke produziert, welche den Brennraum optimal ausfüllen kann.

Von Vorteil ist insbesondere die plattenförmige Ausbildung der Spritzlochscheibe, welche einfach herzustellen und in serienmäßige Brennstoffeinspritzventile einbaubar ist.

Vorteilhafterweise sind mehrere Reihen von Einspritzlöchern auf der Spritzlochscheibe angeordnet, so daß ein Raster entsteht, welches den Erfordernissen entsprechend ausgestaltet werden kann.

Insbesondere ist die Wahl unterschiedlicher Durchmesser der Einspritzlöcher von Vorteil, da auf diese Weise zum einen das Strahlbild geformt und zum anderen die Stöchiometrie der Gemischwolke beeinflußt werden kann.

Die Anordnung des Brennstoffeinspritzventils relativ zur Zündkerze führt dazu, daß die Zündkerze nicht direkt angespritzt wird, da sich der Einspritzstrahl tangential zur Zündkerze bewegt und sich deren Lebensdauer dadurch erhöht.

### Zeichnung

Ausführungsbeispiele der Erfindung sind in der Zeichnung vereinfacht dargestellt und in der nachfolgenden Beschreibung näher erläutert. Es zeigen:
- Fig. 1: einen Längsschnitt durch ein Ausführungsbeispiel des erfindungsgemäßen Brennstoffeinspritzsystems,
- Fig. 2: einen Schnitt durch die durch ein erfindungsgemäßes Brennstoffeinspritzsystem in dem Brennraum erzeugte Gemischwolke,
- Fig. 3: eine Draufsicht auf ein erstes Ausführungsbeispiel einer Spritzlochscheibe eines Brennstoffeinspritzventils für ein erfindungsgemäßes Brennstoffeinspritzsystem,
- Fig. 4: eine Draufsicht auf ein zweites Ausführungsbeispiel einer Spritzlochscheibe, und
- Fig. 5: eine Draufsicht auf ein drittes Ausführungsbeispiel einer Spritzlochscheibe.

### Beschreibung der Ausführungsbeispiele

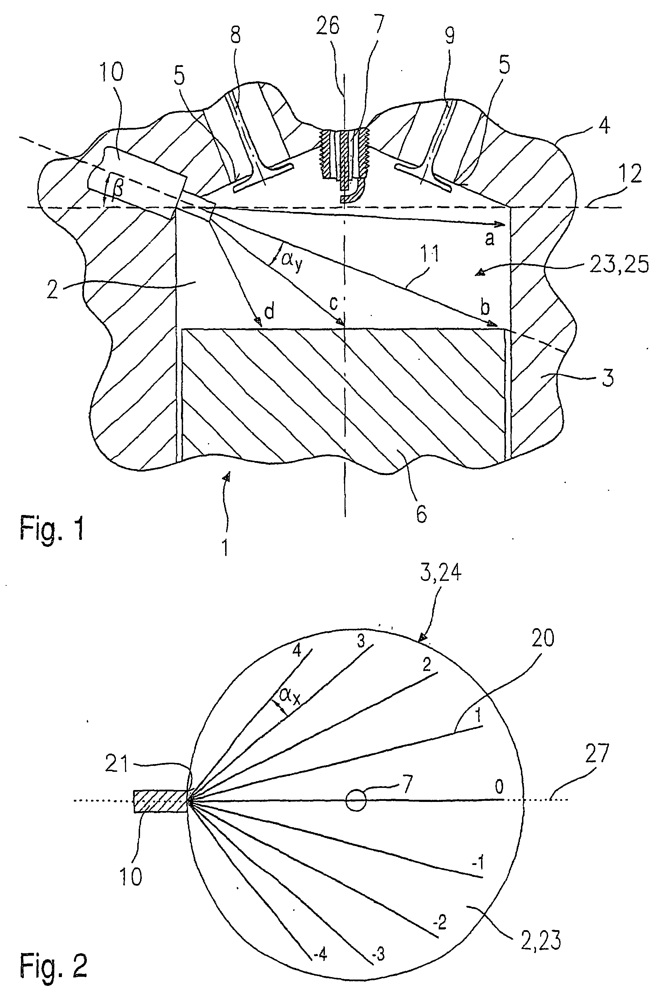

Fig. 1 zeigt in einer auszugsweisen, schematisierten Schnittdarstellung ein erstes Ausführungsbeispiel eines erfindungsgemäßen Brennstoffeinspritzsystems 1 für eine gemischverdichtende fremdgezündete Brennkraftmaschine.

Das Brennstoffeinspritzsystem 1 umfaßt einen Brennraum 2, welcher durch Zylinderwandungen 3, einen Zylinderkopf 4, welcher Firstschrägen 5 aufweist, und einen Kolben 6 begrenzt ist. Eine Zündkerze 7 ist z. B. zentral in den Brennraum 2 hineinragend angeordnet. Ein Einlaßventil 8 und ein Auslaßventil 9 sind an den Firstschrägen 5 angedeutet.

Ein Brennstoffeinspritzventil 10 ist zwischen der Zylinderwandung 3 und dem Zylinderkopf 4 so angeordnet, daß Brennstoff in mehreren Einspritzebenen 11 in den Brennraum 2 eingespritzt wird. Im vorliegenden Ausführungsbeispiel sind vier Einspritzebenen 11 vorgesehen. Das Brennstoffeinspritzventil 10 ist dabei unter einem Winkel β gegenüber einer senkrecht zu einer Längsachse 26 des Brennraums 2 verlaufenden Ebene 12 geneigt. Die Einspritzebenen 11 werden unter einem konstanten Winkel α_{y} zueinander in den Brennraum 2 eingespritzt. Die Einspritzebenen 11 bestehen dabei aus Einspritzstrahlen 20, welche ein in Fig. 2 näher beschriebenes Strahlbild bilden. Die äußere Form der eingespritzten Gemischwolke 25 bzw. die Einhüllende 24 aller Einspritzstrahlen 20 nimmt somit eine zylindrische Form an, die in etwa der Form des Brennraums 2 entspricht.

Fig. 2 zeigt in einer Schnittdarstellung durch den Brennraum 2 das durch das erste Ausführungsbeispiel eines erfindungsgemäßen Brennstoffeinspritzsystems 1 gemäß Fig. 1 erzeugte Strahlbild. Das Brennstoffeinspritzventil 10 spritzt, wie in Fig. 1 dargestellt, den Brennstoff in vier Einspritzebenen 11 in den Brennraum 2 ein. Jede dieser vier Einspritzebenen 11 weist im vorliegenden Ausführungsbeispiel 9 Einspritzstrahlen auf.

Betrachtet man Fig. 1 und Fig. 2 im Zusammenhang, ergibt sich, daß im vorliegenden ersten Ausführungsbeispiel insgesamt sechsunddreißig Einspritzstrahlen 20, welche in vier Einspritzebenen 11 angeordnet sind, in den Brennraum 2 eingespritzt werden. Die Einspritzebenen 11 weisen dabei den konstanten Winkelabstand α_{y} auf, die Einspritzstrahlen 20 jeder Einspritzebene 11 einen Winkelabstand αₓ. Dieser ist jedoch nicht konstant, sondern nimmt von den inneren Einspritzstrahlen nach außen ab. Die nachfolgende Tabelle gibt für das erste Ausführungsbeispiel einen Überblick über die Abstände der Einspritzstrahlen 20 und der Einspritzebenen 11.

| Einspritzebene a | | | | | | | | | |
|---|---|---|---|---|---|---|---|---|---|
| Einspritzstrahl | -4 | -3 | -2 | -1 | 0 | 1 | 2 | 3 | 4 |
| αₓ | -50° | -39° | -27° | -14° | 0° | 14° | 27° | 39° | 50° |
| α_{y} | 9° | 9° | 9° | 9° | 9° | 9° | 9° | 9° | 9° |

| Einspritzebene b | | | | | | | | | |
|---|---|---|---|---|---|---|---|---|---|
| Einspritzstrahl | -4 | -3 | -2 | -1 | 0 | 1 | 2 | 3 | 4 |
| αₓ | -50° | -39° | -27° | -14° | 0° | 14° | 27° | 39° | 50° |
| α_{y} | 0° | 0° | 0° | 0° | 0° | 0° | 0° | 0° | 0° |

| Einspritzebene c | | | | | | | | | |
|---|---|---|---|---|---|---|---|---|---|
| Einspritzstrahl | -4 | -3 | -2 | -1 | 0 | 1 | 2 | 3 | 4 |
| αₓ | -50° | -39° | -27° | -14° | 0° | 14° | 27° | 39° | 50° |
| α_{y} | -9° | -9° | -9° | -9° | -9° | -9° | -9° | -9° | -9° |

| Einspritzebene d | | | | | | | | | |
|---|---|---|---|---|---|---|---|---|---|
| Einspritzstrahl | -4 | -3 | -2 | -1 | 0 | 1 | 2 | 3 | 4 |
| αₓ | -50° | -39° | -27° | -14° | 0° | 14° | 27° | 39° | 50° |
| α_{y} | -18° | -18° | -18° | -18° | -18° | -18° | -18° | -18° | -18° |

Die Einspritzebenen sind dabei fortlaufend von a bis d benannt, wobei a die Einspritzebene 11 bezeichnet, welche am nächsten zur Zündkerze 7 liegt. Die Zahlen von -4 bis 4 bezeichnen die einzelnen Einspritzstrahlen 20 symmetrisch zur Mittelachse 27 der Gemischwolke 25. Diese Bezeichnungen sind in die Figuren 1 und 2 eingetragen.

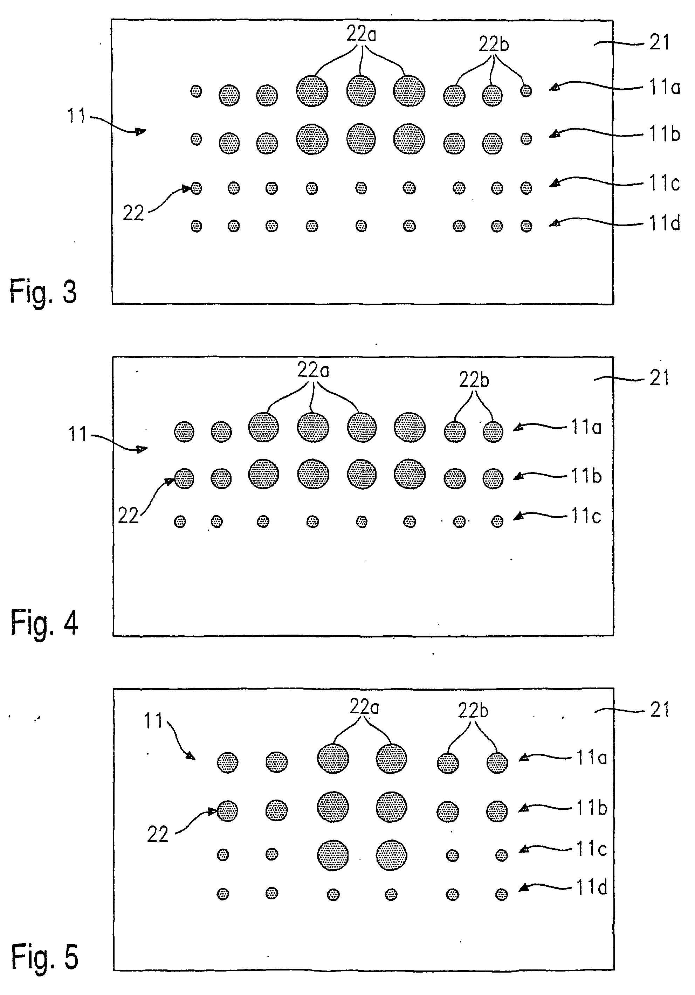

In Fig. 3 ist eine Draufsicht auf ein erstes Ausführungsbeispiel einer Spritzlochscheibe 21 des Brennstoffeinspritzventils 10 des erfindungsgemäßen Brennstoffeinspritzsystems 1 dargestellt. Die in Fig. 3 gezeigte Spritzlochscheibe 21 erzeugt das in den Figuren 1 und 2 dargestellte Strahlbild.

Auf der Spritzlochscheibe 21 sind im vorliegenden Ausführungsbeispiel sechsunddreißig Einspritzlöcher 22 in vier Einspritzebenen 11 angeordnet. Dabei sind jeweils neun Einspritzlöcher 22 in der ersten Einspritzebene 11a, in der zweiten Einspritzebene 11b, in der dritten Einspritzebene 11c und in der vierten Einspritzebene 11d angeordnet. Die Anordnung der Einspritzlöcher 22 entspricht somit in etwa einem rechtwinkligen Raster.

Um das Einspritzvolumen 23, welches ein Unterraum des Brennraums 2 ist, vollständig auszufüllen, besitzen die Einspritzlöcher 22 der Einspritzebenen 11 unterschiedliche Durchmesser. Insbesondere weisen innere Einspritzlöcher 22a der ersten und der zweiten Einspritzebene 11a und 11b einen größeren Durchmesser auf als äußere Einspritzlöcher 22b dieser Ebenen. Die Durchmesser der Einspritzlöcher 22 der dritten und der vierten Einspritzebene 11c und 11d fallen demgegenüber kleiner aus. Als Folge der unterschiedlichen Durchmesser der Einspritzlöcher 22 dringen die Einspritzstrahlen 20 der verschiedenen Einspritzebenen 11 unterschiedlich tief in den Brennraum 2 ein. Brennstoff, welcher durch die inneren Einspritzlöcher 22a der ersten oder zweiten Einspritzebene 11a oder 11b eingespritzt wird, erreicht dabei annähernd die dem Brennstoffeinspritzventil 10 diagonal gegenüberliegende Zylinderwandung 3, während die durch die Einspritzlöcher 22 der dritten und vierten Einspritzebene 11c und 11d eingespritzten Einspritzstrahlen 20 eher in Richtung auf den Kolben 6 eingespritzt werden und bedingt durch den kleineren Durchmesser der Einspritzlöcher 22 kürzere Wege im Brennraum 2 zurücklegen.

Die Anordnung und Beschaffenheit der Einspritzlöcher 22 sowie der Einspritzebenen 11 kann somit so gewählt werden, daß der Brennraum 2 nahezu völlig mit eingespritztem Brennstoff gefüllt wird, ohne daß dabei die Zylinderwandung 3 oder der Kolben 6 übermäßig benetzt werden. Als Folge davon sinkt der Brennstoffverbrauch; auch die Stickoxydemissionen nehmen ab.

Bedingt durch die Anordnung der Einspritzlöcher 22, deren Durchmesser sowie die horizontalen und vertikalen Winkelabstände der einzelnen Einspritzstrahlen 20 zueinander verleiht die Spritzlochscheibe 21 der eingespritzten Gemischwolke 25 in etwa die Form des Einspritzvolumens 23. Die Einhüllende 24 aller Einspritzstrahlen 20 und Einspritzebenen 11 erhält somit eine zylindrische Form, welche in etwa der Form des von dem Kolben 6 freigelassenen Bereichs des Brennraums 2 entspricht.

Die numerischen Durchmesser der einzelnen Einspritzlöcher 22 können beispielsweise für die inneren Einspritzlöcher 22a 100µm betragen, während die Durchmesser der äußeren Einspritzlöcher 22b bzw. der Einspritzlöcher 22 der dritten und vierten Einspritzebene 11c und 11d beispielsweise 25µm betragen können.

In Fig. 4 ist ein zweites Ausführungsbeispiel einer Spritzlochscheibe 21 des Brennstoffeinspritzventils 10 des erf indungsgemäßen Brennstoffeinspritzsystems 1 dargestellt. Im Gegensatz zu der in Fig. 3 dargestellten Spritzlochscheibe 21 besitzt die Spritzlochscheibe 21 des vorliegenden Ausführungsbeispiels nur drei Einspritzebenen 11a, 11b und 11c, in denen jeweils acht Einspritzlöcher 22 angeordnet sind. Dies ergibt eine Gesamtzahl von vierundzwanzig Einspritzlöchern 22. In einem der Fig. 1 entsprechenden Schnitt durch das Brennstoffeinspritzsystem 1 wären demnach drei Einspritzebenen 11a, 11b und 11c zum Ausfüllen des Einspritzvolumens 2,3 vorhanden.

Die Einspritzlöcher 22 weisen wiederum unterschiedliche Durchmesser auf, wobei im vorliegenden Ausführungsbeispiel vier innere Einspritzlöcher 22a einen Durchmesser von ca. 100µm aufweisen, während die Einspritzlöcher der dritten Ebene 11c sowie äußere Einspritzlöcher 22b beispielsweise einen Durchmesser von 50µm aufweisen können.

In der nachstehenden Tabelle sind die Neigungswinkel der Einspritzebenen 11 sowie der Einspritzstrahlen 20 zueinander für das zweite Ausführungsbeispiel aufgeführt.

| Einspritzebene a | | | | | | | | |
|---|---|---|---|---|---|---|---|---|
| Einspritzstrahl | -4 | -3 | -2 | -1 | 1 | 2 | 3 | 4 |
| αₓ | -47° | -35° | -22° | -8° | 8° | 22° | 35° | 47° |
| α_{y} | 10° | 10° | 10° | 10° | 10° | 10° | 10° | 10° |

| Einspritzebene b | | | | | | | | |
|---|---|---|---|---|---|---|---|---|
| Einspritzstrahl | -4 | -3 | -2 | -1 | 1 | 2 | 3 | 4 |
| αₓ | -47° | -35° | -22° | -8° | 8° | 22° | 35° | 47° |
| α_{y} | 0° | 0° | 0° | 0° | 0° | 0° | 0° | 0° |

| Einspritzebene c | | | | | | | | |
|---|---|---|---|---|---|---|---|---|
| Einspritzstrahl | -4 | -3 | -2 | -1 | 1 | 2 | 3 | 4 |
| αₓ | -47° | -35° | -22° | -8° | 8° | 22° | 35° | 47° |
| α_{y} | -10° | -10° | -10° | -10° | -10° | -10° | -10° | -10° |

Die Einspritzebene a liegt der Zündkerze 7 wieder am nächsten.

Fig. 5 stellt ein drittes Ausführungsbeispiel der Spritzlochscheibe 21 des Brennstoff einspritzventils 10 des erfindungsgemäßen Brennstoffeinspritzsystems 1 dar. Wie im ersten Ausführungsbeispiel sind die Einspritzlöcher 22 in vier Einspritzebenen 11 angeordnet. Die Anzahl der Einspritzlöcher 22 pro Einspritzebene 11 beträgt im vorliegenden Ausführungsbeispiel jedoch nur sechs. Dies ergibt eine Gesamtzahl von vierundzwanzig Einspritzlöchern 22 auf der Spritzlochscheibe 21. Die. inneren Einspritzlöcher 22a weisen beispielsweise einen Durchmesser von 100µm auf, während die äußeren Einspritzlöcher 22b einen Durchmesser von 50µm haben. Die Einspritzlöcher 22 der vierten Einspritzebene 11d sind dabei wieder am kleinsten.

In der nachstehenden Tabelle sind die Neigungswinkel der Einspritzebenen 11 sowie der Einspritzstrahlen 20 zueinander für das dritte Ausführungsbeispiel aufgeführt.

| Einspritzebene a | | | | | | |
|---|---|---|---|---|---|---|
| Einspritzstrahl | -3 | -2 | -1 | 1 | 2 | 3 |
| αₓ | -44° | -28° | -10° | 10° | 28° | 44° |
| α_{y} | 20° | 20° | 20° | 20° | 20° | 20° |

| Einspritzebene b | | | | | | |
|---|---|---|---|---|---|---|
| Einspritzstrahl | -3 | -2 | -1 | 1 | 2 | 3 |
| αₓ | -44° | -28° | -10° | 10° | 28° | 44° |
| α_{y} | 10° | 10° | 10° | 10° | 10° | 10° |

| Einspritzebene c | | | | | | |
|---|---|---|---|---|---|---|
| Einspritzstrahl | -3 | -2 | -1 | 1 | 2 | 3 |
| αₓ | -44° | -28° | -10° | 10° | 28° | 44° |
| α_{y} | 0° | 0° | 0° | 0° | 0° | 0° |

| Einspritzebene d | | | | | | |
|---|---|---|---|---|---|---|
| Einspritzstrahl | -3 | -2 | -1 | 1 | 2 | 3 |
| αₓ | -44° | -28° | -10° | 10° | 28° | 44° |
| α_{y} | -10° | -10° | -10° | -10° | -10° | -10° |

Auch im vorliegenden Ausführungsbeispiel ist die Einspritzebene a die der Zündkerze 7 am nächsten liegende.

Die Erfindung ist nicht auf die dargestellten Ausführungsbeispiele beschränkt und z. B. auch für Spritzlochscheiben mit mehr oder weniger Einspritzebenen bzw. mehr oder weniger Einspritzlöchern auch unterschiedlicher Lochdurchmesser anwendbar.

## Patentansprüche

1. Brennstoffeinspritzsystem (1) für Brennkraftmaschinen mit einem Brennstoffeinspritzventil (10), welches eine Spritzlochscheibe (21) mit Einspritzlöchern (22) aufweist, durch die Brennstoff in einen Brennraum (2) eingespritzt wird, der von einer Zylinderwandung (3) begrenzt ist, mit einem Kolben (6), der in der Zylinderwandung (3) geführt ist, und mit einer in den Brennraum (2) ragenden Zündkerze (7), wobei die Durchmesser der auf der Spritzlochscheibe (21) angeordneten Einspritzlöcher (22) so verteilt sind, dass zu einem bestimmten Einspritzzeitpunkt der eingespritzte Brennstoff in einem von dem Kolben (6) und der Zylinderwandung (3) begrenzten Einspritzvolumen (23) des Brennraums (2) möglichst homogen verteilt wird, und die Einspritzlöcher (22) in mehreren Reihen rasterartig auf der Spritzlochscheibe (21) angeordnet sind,
**dadurch gekennzeichnet,**
**dass** die Einspritzlöcher (22) derart rasterartig auf der Spritzlochscheibe (21) des Brennstoffeinspritzventils (10) angeordnet und ausgerichtet sind, dass das Brennstoffeinspritzventil (10) Brennstoff in mindestens zwei Einspritzebenen (11) in den Brennraum (2) einspritzt, die durch einen Winkel (α_{y}) voneinander beabstandet sind.

2. Brennstoffeinspritzsystem nach Anspruch 1,
**dadurch gekennzeichnet,**
**dass** die Einspritzebenen (11) einen konstanten Winkelabstand (α_{y}) aufweisen.

3. Brennstoffeinspritzsystem nach Anspruch 2,
**dadurch gekennzeichnet,**
**dass** ein Strahlöffnungswinkel (α_{ges}) einer Einhüllenden (24) der Gemischwolke (25) zwischen 50° und 100° beträgt.

4. Brennstoffeinspritzsystem nach Anspruch 3,
**dadurch gekennzeichnet,**
**dass** die durch die Einspritzlöcher (22) in den Brennraum (2) eingespritzten Einspritzstrahlen (20) der verschiedenen Einspritzebenen (11) einen von einer Mittelachse (27) ausgehend abnehmenden Winkelabstand (αₓ) aufweisen.

5. Brennstoffeinspritzsystem nach Anspruch 4,
**dadurch gekennzeichnet,**
**dass** die randseitigen Einspritzlöcher (22b) mindestens einer Einspritzebene (11) kleiner sind als die innenseitigen Einspritzlöcher (22a) dieser Einspritzebene (11).

6. Brennstoffeinspritzsystem nach Anspruch 5,
**dadurch gekennzeichnet,**
**dass** die randseitigen Einspritzlöcher (22b) mindestens einer Einspritzebene (11) größer sind als die randseitigen Einspritzlöcher (22b) einer weiteren Einspritzebene (11).

7. Brennstoffeinspritzsystem nach Anspruch 1,
**dadurch gekennzeichnet,**
**dass** das Brennstoffeinspritzventil (10) gegenüber einer zu einer Längsachse (26) des Brennraums (2) senkrechten Ebene (12) um einen bestimmten Winkel **(β)** geneigt ist.

8. Brennstoffeinspritzsystem nach Anspruch 7,
**dadurch gekennzeichnet,**
**dass** der Winkel (β) zwischen 35° und 55° beträgt.

9. Brennstoffeinspritzsystem nach einem der vorhergehenden Ansprüche,
**dadurch gekennzeichnet,**
**dass** die Spritzlochscheibe (21) des Brennstoffeinspritzventils (10) so gestaltet ist, dass die Einhüllende (24) einer eingespritzten Gemischwolke (25) nahezu zylinderförmig ist.

## Claims

1. Fuel injection system (1) for internal combustion engines, having a fuel injection valve (10) which has a perforated injection disc (21) with injection holes (22), through which fuel is injected into a combustion chamber (2) which is delimited by a cylinder wall (3), having a piston (6) which is guided in the cylinder wall (3), and having a spark plug (7) projecting into the combustion chamber (2), the diameters of the injection holes (22) arranged on the perforated injection disc (21) being distributed such that, at a defined injection time, the injected fuel is distributed as homogeneously as possible in an injection volume (23), delimited by the piston (6) and the cylinder wall (3), of the combustion chamber (2), and the injection holes (22) being arranged on the perforated injection disc (21) in a plurality of rows in the manner of a grid, **characterized in that** the injection holes (22) are aligned and arranged on the perforated injection disc (21) of the fuel injection valve (10) in the manner of a grid such that the fuel injection valve (10) injects fuel into the combustion chamber (2) in at least two injection planes (11) which are spaced apart from one another by an angle (α_{y}).

2. Fuel injection system according to Claim 1, **characterized in that** the injection planes (11) have a constant angular distance (α_{y}).

3. Fuel injection system according to Claim 2, **characterized in that** a jet opening angle (αₜₒₜ) of an envelope (24) of the mixture cloud (25) is between 50° and 100°.

4. Fuel injection system according to Claim 3, **characterized in that** the injection jets (20), injected into the combustion chamber (2) through the injection holes (22), of the various injection planes (11) have a decreasing angular distance (αₓ), starting from a central axis (27).

5. Fuel injection system according to Claim 4, **characterized in that** the injection holes (22b) at the edge of at least one injection plane (11) are smaller than the injection holes (22a) on the inside of the said injection plane (11).

6. Fuel injection system according to Claim 5, **characterized in that** the injection holes (22b) at the edge of at least one injection plane (11) are larger than the injection holes (22b) at the edge of a further injection plane (11).

7. Fuel injection system according to Claim 1, **characterized in that** the fuel injection valve (10) is inclined at a defined angle (β) with respect to a plane (12) which is perpendicular to a longitudinal axis (26) of the combustion chamber (2) .

8. Fuel injection system according to Claim 7, **characterized in that** the angle (β) is between 35° and 55°.

9. Fuel injection system according to one of the preceding claims, **characterized in that** the perforated injection disc (21) of the fuel injection valve (10) is designed such that the envelope (24) of an injected mixture cloud (25) is virtually cylindrical.

## Revendications

1. Système d'injection de carburant (1) pour des moteurs à combustion interne, dans lequel:
- un injecteur de carburant (10) présente une plaque à trous d'injection (21) percée de trous d'injection (22) à travers lesquels le carburant est injecté dans une chambre de combustion (2) délimitée par une paroi de cylindre (3) et par un piston (5) coulissant le long de cette paroi,
- dans la chambre de combustion (2) pénètre une bougie d'allumage (7),
- les diamètres des trous d'injection (22) percés dans la plaque (21) sont répartis de manière qu'à un certain moment, le carburant injecté dans le volume d'injection (23) de la chambre de combustion (2), délimité par le piston (6) et la paroi de cylindre (3) présente la répartition la plus homogène possible, les trous d'injection (22) étant disposés sur la plaque à trous (21) en plusieurs lignes formant un quadrillage,
**caractérisé en ce que**
les trous d'injection (22) formant un quadrillage sur la plaque à trous (21) de l'injecteur (10) sont disposés et orientés de manière que le carburant est injecté dans la chambre de combustion (2) selon au moins deux plans (11) présentant entre eux un écart angulaire (α_{y}).

2. Système d'injection de carburant selon la revendication 1,
**caractérisé en ce que**
les plans d'injection (11) présentent entre eux un écart angulaire (α_{y}) constant.

3. Système d'injection de carburant selon la revendication 2,
**caractérisé en ce que**
l'angle total d'ouverture des jets (α_{ges}) de l'enveloppe (24) du nuage de mélange (25) est compris entre 50 et 100°.

4. Système d'injection de carburant selon la revendication 3,
**caractérisé en ce que**
les jets d'injection (20) projetés dans la chambre de combustion (2) à travers les trous d'injection (22) des différents plans d'injection (11) présentent entre eux des écarts angulaires (αₓ) qui vont en diminuant quand on s'éloigne de l'axe central (27) de l'injecteur.

5. Système d'injection de carburant selon la revendication 4,
**caractérisé en ce que**
les trous d'injection (22b), situés vers les bords, dans au moins un plan d'injection (11) sont plus petits que les trous d'injection (22a), situés vers l'intérieur dans le plan d'injection (11).

6. Système d'injection de carburant selon la revendication 5,
**caractérisé en ce que**
les trous d'injection (22b) situés vers les bords, dans au moins un plan d'injection (11) sont plus grands que les trous d'injection (22b) situés vers les bords, dans un autre plan d'injection (11).

7. Système d'injection de carburant selon la revendication 1,
**caractérisé en ce que**
l'injecteur de carburant (10) est incliné d'un angle (β) défini, par rapport à un plan (12), perpendiculaire à l'axe longitudinal (26) de la chambre de combustion (2).

8. Système d'injection de carburant selon la revendication 7,
**caractérisé en ce que**
l'angle (β) est compris entre 35° et 55°.

9. Système d'injection de carburant selon l'une quelconque des revendications précédentes,
**caractérisé en ce que**
la plaque à trous d'injection (21) de l'injecteur de carburant (10) est configurée de manière que l'enveloppe (24) d'un nuage de mélange injecté (25) est peu près cylindrique.
